# EUROPEAN PATENT APPLICATION

(11) **EP 2 662 589 A1**
(43) Date of publication of application: **13.11.2013**
(21) Application number: 12823243.6
(22) Date of filing: 29.11.2012
(51) Int. Cl.: F16F 9/02

(54) **GAS PISTON CYLINDER DESIGN**

(30) Priority: 29.11.2011 ES 201131930 P
(71) Applicant: Técnicas Aplicadas de Presión S.L., E-01013 Vitoria-Gasteiz (Álava) (ES)
(72) Inventor: PÉREZ VILLAR, Emilio, E-01013 Vitoria-Gasteiz (Álava) (ES)
(74) Representative: Elzaburu Marquez, Alberto
(86) International application number: PCT/ES2012/070839
(87) International publication number: WO 2013/079758

(57) **Abstract**

A gas cylinder-piston device (10) comprising a body (1) as structure, a rod-piston (2) that moves inside of said body (1), a bushing (20) between the body (1) and the rod-piston (2), the interior of the body (1) occupied by a compressible gas, characterised in that said bushing (20) comprises a deformable zone (40), which in turn contains an O-ring seal (3) that forms an airtight junction of the bushing (20) with the inner face of the body (1), wherein said deformable zone (40) is designed in a manner such that surrounds at least the O-ring seal (3) such that, in case of rod-piston (2) expansion overspeed within the body (1), through deformation, the deformable zone (40) causes the O-ring seal (3) to lose the airtight seal at the junction of the bushing (20) with the inner face of the body (1).

## Description

### FIELD OF THE INVENTION

This invention is related to a design for a gas cylinder-piston device that prevents incidents in case of piston expansion overspeed.

### BACKGROUND

Gas compression devices are fluid machines constituted to increase the pressure and displace certain types of fluids known as compressible, such as gases and fumes, by means of an exchange of energy between the machine and the fluid.

The working fluid in such compression devices is a compressible fluid, which undergoes a significant change in its density and, generally, also in its temperature. Presently, such devices are widely used in a variety of engineering applications, with a variety of types in existence that vary in terms of their functioning and design. Compressors that feature axial movement through the use of a rod and piston with axial displacement are also known as cylinder-piston devices.

Said cylinder-piston devices comprise a body, a rod-piston, and a mechanical stoppage piece (bushing) that joins rod and body, and which marks the end of stroke of the rod-piston, such that said rod-piston moves inside of a gas chamber, the chamber comprising a cylinder that acts as a housing (body), and which guides the movement of the aforementioned rod-piston. The movement of the rod-piston within the cylinder compresses the gas inside. Said compressed gas, when released, produces energy that is exchanged with the fluid machine. Devices of this type are used in systems that require a moderate amount of power, such as die-casting and stamping systems.

In the aforementioned cylinder-piston devices there is a problem of piston expansion overspeed within the cylinder, specifically in terms of exceeding the maximum allowable rod-piston expansion speed inside of the cylinder. In such cases, where the maximum allowable expansion speed is exceeded, breakage of the rod-piston's mechanical stoppage piece (bushing) that joins the rod and body and which marks the rod-piston's end of stroke, can occur on impact at high speed into the same. For this reason, the piston may become accidentally detached from the rod, leaving the rod free to accelerate and exit the cylinder at high speed, causing very serious damages. Such speed excess can be caused by high-speed repetitive work being performed by the machine in which the device is installed, or else by a sudden, accidental loosening of the device itself.

The modified design of a pressurised gas device intended to reduce the speed of the piston's rod is known from document ES 2177244. In the inner portion of the cylinder structure, this device comprises additional breakable elements that prevent expulsion of the rod, absorbing kinetic energy from said rod and thereby stopping its motion. These additional breakable elements comprise a rim and a head with a rupture area. When breakage occurs, the shape of the gas device's airtight closure seal is altered, allowing gas to escape as a visual indication of failure, while also dissipating kinetic energy. The problem presented by solutions of this nature is that in order to secure the desired effect, or in other words, to ensure that breakage does occur in the areas designed for that purpose, the production process must incorporate some appropriate specific thermal treatments that make the production process more complex and increase production costs.

Document ES 2244819 presents a design for an energy-accumulating piston-cylinder device, where excess pressure is released through the controlled deformation of an external area of the housing inside of which the piston moves, in a manner such that this deformation causes inner seal elements to lose contact with the inner face of the housing, and in this way causing necessary excess pressure to escape. The problem that solutions of this nature present is related to the fact that they require changes to the exterior structure of the device's elements in order to eliminate excess pressure, which can lead to possible functional problems and which also make the device's design more complex and costly.

The present invention therefore represents an effort to overcome the disadvantages and drawbacks described above.

### SUMMARY OF THE INVENTION

Thus, the present invention provides a gas cylinder-piston device that prevents incidents in case of rod-piston expansion overspeed. The invention's cylinder-piston device comprises a cylinder (body) that acts as an exterior housing, inside of which a rod-piston moves in an axial manner. Between the body's inner face and the piston's outer face, the cylinder-piston device further comprises a bushing, such that said bushing forms an airtight seal with the inner face of the cylinder by means of at least a bushing-body O-ring seal. Said bushing also forms an airtight seal with the outer face of the rod-piston by means of a bushing-rod dynamic sealing gasket.

Said cylinder-piston device in turn comprises a body, a rod-piston and a bushing that joins the rod and the body and which marks the end of stroke of the piston inside of the cylinder. Said cylinder confines within a compressible gas, in a manner such that, when the rod-piston moves within the device, the volume occupied by said gas decreases, and the gas becomes compressed.

The device of the invention provides a solution for problems that derive from a rod-piston expansion overspeed within the cylinder wherein it moves.

Thus, the gas cylinder-piston device of the invention is based upon a design where the fixed bushing comprises a crumple zone or specific deformable zone such that, in case of rod-piston expansion overspeed within the cylinder, the aforementioned crumple zone of the bushing will deform, thereby causing at least one of the bushing-body O-ring seal to stop exerting pressure against the inner wall of the body, thereby allowing gas to escape to the exterior, thus eliminating the pressure within the device and therefore eliminating the risk of breakage of the piston's rod, consequently preventing its outward ejection.

### BRIEF DESCRIPTION OF THE FIGURES

The following objects and many of the advantages of this invention will be more readily appreciated as the former is better understood by reference to the following detailed description along with the accompanying figures, where:
Figure 1 shows a cross-sectional view of the gas cylinder-piston device of the invention.
Figure 2a and 2b show a cross-sectional view of the gas cylinder-piston device of the invention, as well as a detailed view of said cross-section, showing operation in case of piston overspeed.

### DETAILED DESCRIPTION OF THE INVENTION

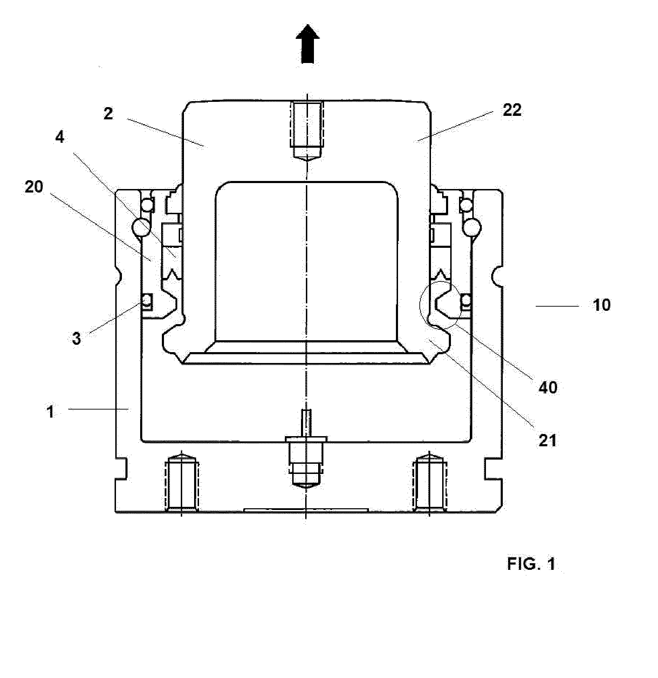

As seen in the cross-sectional view in Figure 1, the gas cylinder-piston device 10 of the invention comprises a structure or housing, body 1 inside of which a rod-piston 2 moves axially, being the interior of said body 1 occupied by a compressible gas. Between the inner face of the body 1 and the outer face of the rod-piston 2, the device 10 further comprises a non-movable bushing 20, such that this bushing 20 forms an airtight seal with the inner face of the body 1 by means of at least a bushing-body O-ring seal 3. The bushing 20 also forms an airtight seal with the outer face of the rod-piston 2 by means of a bushing-rod dynamic sealing gasket 4.

Said rod-piston 2 comprises a piston 21 and a rod 22.

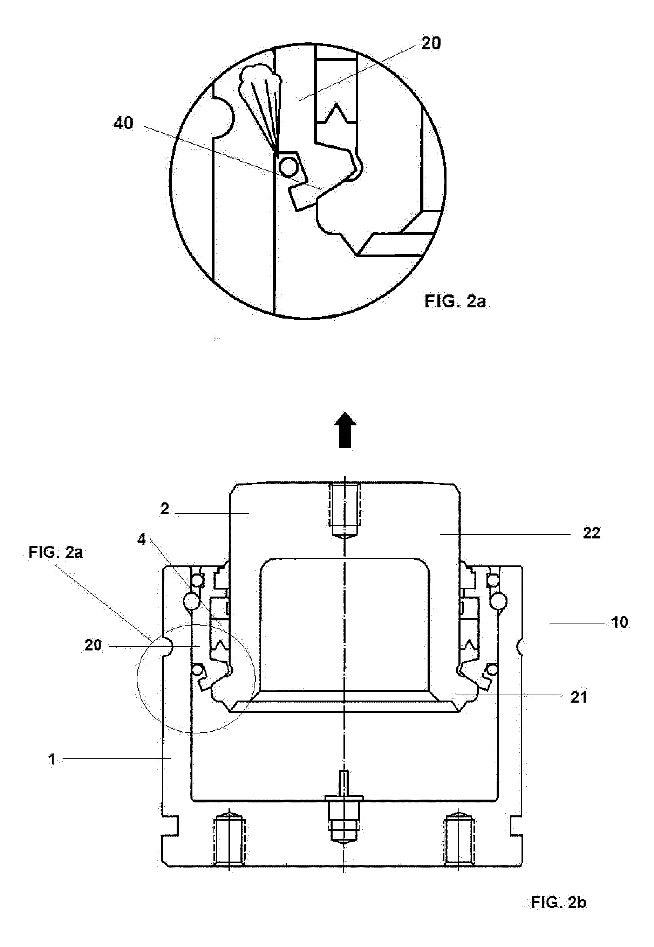

The gas cylinder-piston device 10 of the invention is designed in a manner such that the bushing 20 comprises a crumple zone 40 or specifically deformable zone that surrounds at least the one bushing-body O-ring seal 3 such that, in case of rod-piston 2 expansion overspeed within the body 1, the aforementioned crumple zone 40 of the bushing 20 will deform, thereby causing at least one of the O-ring seals 3 of the bushing 20 and the body 1 to stop exerting pressure against the inner wall of the body 1, thereby allowing gas to escape to the exterior, thus eliminating the pressure within the body 1 (see Figure 2a and detail in Figure 2b).

Said deformable zone 40 or crumple zone is performed by means of the design of the shape of the bushing 20 and its thicknesses, locating the impact zone of the rod-piston 2 in a specific location such that in a case of rod-piston 2 expansion overspeed, this zone will become slightly deformed towards the interior of the gas cylinder-piston device 10, without breaking.

Although this invention has been described here entirely in connection with preferred embodiments, it is evident that modifications could be introduced within the scope of, without said scope being limited by these embodiments, the contents of the following claims.

## Claims

1. A gas cylinder-piston device (10) comprising a body (1) as structure, and a rod-piston (2) that moves inside of said body (1), the interior of the body (1) occupied by a compressible gas, **characterised in that** the device (10) further comprises a bushing (20) between the body (1) and the rod-piston (2), such that said bushing (20) comprises a deformable zone (40), which in turn contains an O-ring seal (3) that forms an airtight junction of the bushing (20) with the inner face of the body (1), said deformable zone (40) designed in a manner such that, through deformation, causes the O-ring seal (3) to lose the airtight seal at the junction of the bushing (20) with the inner face of the body (1).

2. The gas cylinder-piston device (10) according to claim 1, wherein said deformable zone (40) is performed by means of the design of the shape and thickness of the bushing (20), locating the impact zone of the rod-piston (2) in a specific location such that in case of rod-piston (2) expansion overspeed, the deformable zone (40) becomes deformed towards the interior of the gas cylinder-piston device (10) without breaking.
